# EUROPEAN PATENT APPLICATION

(11) **EP 4 797 799 A1**
(43) Date of publication of application: **26.08.2026**
(21) Application number: 24888090.8
(22) Date of filing: 08.11.2024
(51) Int. Cl.: H04W 36/30

(54) **COMMUNICATION METHOD AND APPARATUS**

(30) Priority: 11.11.2023 CN 202311513280
(71) Applicant: HUAWEI TECHNOLOGIES CO., LTD., Shenzhen, Guangdong 518129 (CN)
(72) Inventor: GUO, Yuchen, Shenzhen, Guangdong 518129 (CN); ZHAO, Yue, Shenzhen, Guangdong 518129 (CN); LI, Yunbo, Shenzhen, Guangdong 518129 (CN)
(74) Representative: Isarpatent
(86) International application number: PCT/CN2024/130855
(87) International publication number: WO 2025/098479

(57) **Abstract**

A communication method and apparatus are applied to support a next-generation Wi-Fi protocol (for example, 802.11be, Wi-Fi 7, or EHT) of IEEE 802.11ax, a next-generation Wi-Fi protocol (for example, 802.11bn, Wi-Fi 8, or UHR) of IEEE 802.11be, Wi-Fi AI, a millimeter wave (MMW), an ultra-wideband (UWB), sensing, or the like. A first communication apparatus sends a first radio frame, and a second communication apparatus receives the first radio frame. The first radio frame includes first OBSS information. For example, the first OBSS information indicates information about a first OBSS that causes the first communication apparatus to perform non-primary channel transmission. Therefore, the second communication apparatus may learn of the first OBSS information. When receiving a radio frame sent by a first OBSS station, the foregoing two apparatuses may synchronously switch to a non-primary channel, thereby improving communication efficiency.

## Description

This application claims priority to Chinese Patent Application No. 202311513280.1, filed with the China National Intellectual Property Administration on November 11, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

With development of wireless technologies, a system bandwidth continuously increases. For example, in the wireless fidelity (wireless fidelity, Wi-Fi) field, Wi-Fi 6 and an earlier system support a maximum bandwidth of 160 megahertz (MHz), and in Wi-Fi 7, a maximum bandwidth reaches 320 MHz. A larger bandwidth may be used to provide a higher transmission rate.

It is stipulated in the 802.11 series standards that a channel can be successfully obtained through contention only when a primary channel is idle; and if the primary channel is busy, even if another channel is idle, the another channel cannot be used. For example, a bandwidth of the primary channel may be 20 MHz, and a location of the primary channel may be in an entire system bandwidth (for example, 320 MHz).

When the primary channel is occupied, how to improve communication efficiency needs to be urgently resolved.

### SUMMARY

Embodiments of this application provide a communication method and apparatus, to effectively ensure that a transmit end and a receive end synchronously jump to a non-primary channel, thereby improving communication efficiency.

According to a first aspect, an embodiment of this application provides a communication method. The method is applied to a first communication apparatus, the first communication apparatus includes a Wi-Fi device, or a Wi-Fi chip, a functional module, or the like that may be disposed in the Wi-Fi device, and the method includes:
sending a first radio frame, where the first radio frame includes first overlapping basic service set (overlapping basic service set, OBSS) information; receiving a second radio frame on a first channel, where the second radio frame is a radio frame sent by a station in a first OBSS indicated by the first OBSS information; and switching a communication channel.

For example, the first OBSS information indicates information about a first OBSS that causes the first communication apparatus to switch a communication channel. The first communication apparatus may switch a communication channel when the second radio frame is a radio frame sent by the station in the first OBSS indicated by the first OBSS information. For example, the first communication apparatus may switch a communication channel based on the first OBSS information when the first communication apparatus receives the second radio frame.

In this embodiment of this application, the first communication apparatus sends the first OBSS information, so that a second communication apparatus can effectively learn of the first OBSS (for example, the first OBSS is an OBSS that causes the first communication apparatus to switch a communication channel) based on the first OBSS information. In this way, when both the first communication apparatus and the second communication apparatus receive the radio frame from the station in the first OBSS, the second communication apparatus can effectively learn of whether the first communication apparatus switches a communication channel. This ensures that the first communication apparatus and the second communication apparatus can synchronously switch a communication channel, so that the first communication apparatus and the second communication apparatus can perform communication on a same communication channel, thereby improving communication efficiency.

In a possible implementation, the first OBSS information may indicate information about a plurality of first OBSSs that cause the first communication apparatus to switch a communication channel. For example, the first OBSS may be one of the plurality of OBSSs that cause the first communication apparatus to switch a communication channel.

In a possible implementation, that the second radio frame is a radio frame sent by the station in the first OBSS may alternatively be that the second radio frame is a radio frame corresponding to the first OBSS, or transmit end information of the second radio frame matches the first OBSS information.

In this embodiment of this application, the second radio frame is a radio frame sent by the station in the first OBSS. Therefore, the first communication apparatus and the second communication apparatus may synchronously switch a communication channel when receiving the second radio frame.

In a possible implementation, that the second radio frame is a radio frame corresponding to the first OBSS includes: a BSS color value in the second radio frame is a BSS color value of the first OBSS; or a BSSID in the second radio frame is a BSSID of the first OBSS.

In a possible implementation, switching a communication channel includes: switching a communication channel when at least one of the following conditions is met: a received signal strength indicator (received signal strength indicator, RSSI) of the second radio frame is greater than or equal to an RSSI threshold; and a length of the second radio frame is greater than or equal to a length threshold.

In this embodiment of this application, if the RSSI of the second radio frame is greater than or equal to the RSSI threshold, it indicates that the second radio frame sent by the station in the first OBSS causes large interference to the first communication apparatus and the second communication apparatus. Therefore, the first communication apparatus and the second communication apparatus can synchronously switch a communication channel, to ensure that the first communication apparatus and the second communication apparatus can communicate with each other. This improves communication efficiency. Alternatively, if the length of the second radio frame is greater than or equal to the length threshold, it indicates that the first communication apparatus and the second communication apparatus can implement long-time communication on the second channel, thereby improving communication efficiency.

In a possible implementation, the first radio frame further includes information about the RSSI threshold or information about the length threshold.

In a possible implementation, the RSSI threshold is defined by a standard.

In a possible implementation, the length threshold is defined by a standard.

In a possible implementation, the first OBSS information includes at least one of the following: basic service set (basic service set, BSS) color information of the first OBSS; BSS identifier (BSS identifier, BSSID) information of the first OBSS; and medium access control (medium access control, MAC) address information of the station in the first OBSS.

In a possible implementation, the BSS color information is a bitmap of a BSS color value, each bit in the bitmap of the BSS color value corresponds to one BSS color value, and a value of each bit indicates whether the corresponding BSS color value is a BSS color value that is of the first OBSS and that causes the first communication apparatus to switch a communication channel; or the BSS color information indicates one or more BSS color values, and the BSS color value is a BSS color value that is of the first OBSS and that causes the first communication apparatus to switch a communication channel; or the BSSID information is a bitmap of a partial BSSID, the partial BSSID is m bits in a BSSID, the bitmap of the partial BSSID includes 2^{m} bits, each bit in the bitmap of the partial BSSID corresponds to one partial BSSID, and a value of each bit indicates whether the corresponding partial BSSID is a partial BSSID that is of the first OBSS and that causes the first communication apparatus to switch a communication channel.

In a possible implementation, the method further includes: receiving a third radio frame. The third radio frame includes second OBSS information. For example, the second OBSS information indicates information about a second OBSS that causes the second communication apparatus to switch a communication channel.

In this embodiment of this application, the second communication apparatus sends the second OBSS information, so that the first communication apparatus can effectively learn of the second OBSS based on the second OBSS information. This further ensures that the first communication apparatus and the second communication apparatus can synchronously switch a communication channel, so that the first communication apparatus and the second communication apparatus communicate on a same communication channel as much as possible, thereby improving communication efficiency.

In a possible implementation, the second OBSS information may indicate information about a plurality of second OBSSs that cause the second communication apparatus to switch a communication channel. For example, the second OBSS may be one of a plurality of OBSSs that cause the second communication apparatus to switch a communication channel.

In a possible implementation, switching a communication channel includes at least one of the following: switching from a first channel to a second channel, performing signal monitoring on the second channel, performing channel contention on the second channel, and sending or receiving a radio frame on the second channel.

In a possible implementation, the first channel is a primary channel. In a possible implementation, the second channel is a non-primary channel.

In this embodiment of this application, that the first communication apparatus switches a communication channel may be that the first communication apparatus performs a non-primary channel operation or the first communication apparatus performs non-primary channel transmission. That the second communication apparatus switches a communication channel may be that the second communication apparatus performs a non-primary channel operation or the second communication apparatus performs non-primary channel transmission.

According to a second aspect, an embodiment of this application provides a communication method. The method is applied to a second communication apparatus, the second communication apparatus includes a Wi-Fi device, or a Wi-Fi chip, a functional module, or the like that may be disposed in the Wi-Fi device, and the method includes:
receiving a first radio frame, where the first radio frame includes first overlapping basic service set OBSS information; receiving a second radio frame on a first channel, where the second radio frame is a radio frame sent by a station in a first OBSS indicated by the first OBSS information; and switching a communication channel.

For example, the first OBSS information indicates information about a first OBSS that causes a first communication apparatus to switch a communication channel.

In a possible implementation, that the second radio frame is a radio frame sent by the station in the first OBSS may alternatively be that the second radio frame is a radio frame corresponding to the first OBSS.

In a possible implementation, that the second radio frame is a radio frame corresponding to the first OBSS includes: a BSS color value in the second radio frame is a BSS color value of the first OBSS; or a BSSID in the second radio frame is a BSSID of the first OBSS.

In a possible implementation, switching a communication channel includes: switching a communication channel when at least one of the following conditions is met: a received signal strength indicator RSSI of the second radio frame is greater than or equal to an RSSI threshold; and a length of the second radio frame is greater than or equal to a length threshold.

In a possible implementation, the first radio frame further includes information about the RSSI threshold or information about the length threshold.

In a possible implementation, the first OBSS information includes at least one of the following: basic service set BSS color information of the first OBSS; BSS identifier BSSID information of the first OBSS; and medium access control MAC address information of the station in the first OBSS.

In a possible implementation, the BSS color information is a bitmap of a BSS color value, each bit in the bitmap of the BSS color value corresponds to one BSS color value, and a value of each bit indicates whether the corresponding BSS color value is a BSS color value that is of the first OBSS and that causes the first communication apparatus to switch a communication channel; or the BSS color information indicates one or more BSS color values, and the BSS color value is a BSS color value that is of the first OBSS and that causes the first communication apparatus to switch a communication channel; or the BSSID information is a bitmap of a partial BSSID, the partial BSSID is m bits in a BSSID, the bitmap of the partial BSSID includes 2^{m} bits, each bit in the bitmap of the partial BSSID corresponds to one partial BSSID, and a value of each bit indicates whether the corresponding partial BSSID is a partial BSSID that is of the first OBSS and that causes the first communication apparatus to switch a communication channel.

In a possible implementation, the method further includes: sending a third radio frame. The third radio frame includes second OBSS information. For example, the second OBSS information indicates information about a second OBSS that causes the second communication apparatus to switch a communication channel.

In a possible implementation, switching a communication channel includes at least one of the following: switching from a first channel to a second channel, performing signal monitoring on the second channel, performing channel contention on the second channel, and sending or receiving a radio frame on the second channel.

In a possible implementation, the first channel is a primary channel. In a possible implementation, the second channel is a non-primary channel.

For other implementations or beneficial effects of the second aspect, refer to the first aspect. Details are not described herein again.

According to a third aspect, an embodiment of this application provides a communication method. The method is applied to a first communication apparatus, the first communication apparatus includes a Wi-Fi device, or a Wi-Fi chip, a functional module, or the like that may be disposed in the Wi-Fi device, and the method includes:
receiving a physical layer (physical layer, PHY) protocol data unit (PHY protocol data unit, PPDU), where the first communication apparatus performs non-primary channel transmission when the PPDU meets at least one of the following: transmit end information of the PPDU matches first OBSS information; an RSSI of the PPDU is greater than or equal to an RSSI threshold; and a length of the PPDU is greater than or equal to a length threshold.

With reference to the third aspect, in a possible implementation, the method further includes: sending first OBSS information. For example, the first OBSS information indicates information about a first OBSS that causes the first communication apparatus to switch a communication channel.

According to a fourth aspect, an embodiment of this application provides a communication method. The method is applied to a second communication apparatus, the second communication apparatus includes a Wi-Fi device, or a Wi-Fi chip, a functional module, or the like that may be disposed in the Wi-Fi device, and the method includes:
receiving a physical layer (physical layer, PHY) protocol data unit (PHY protocol data unit, PPDU), where the second communication apparatus performs non-primary channel transmission when the PPDU meets at least one of the following: transmit end information of the PPDU matches first OBSS information; an RSSI of the PPDU is greater than or equal to an RSSI threshold; and a length of the PPDU is greater than or equal to a length threshold.

With reference to the fourth aspect, in a possible implementation, the method further includes: receiving first OBSS information. For example, the first OBSS information indicates information about a first OBSS that causes a first communication apparatus to switch a communication channel.

With reference to the third aspect or the fourth aspect, in a possible implementation, the first OBSS information includes at least one of the following: BSS color information of the first OBSS; BSSID information of the first OBSS; and MAC address information of a station in the first OBSS.

With reference to the third aspect or the fourth aspect, that the transmit end information of the PPDU matches the first OBSS information includes that the transmit end information of the PPDU is included in the first OBSS information. For example, a BSS color value in the PPDU is included in the first OBSS information, or a BSSID in the PPDU is included in the first OBSS information, or a MAC address of an OBSS station that sends the PPDU is included in the first OBSS information.

With reference to the third aspect or the fourth aspect, in a possible implementation, that the transmit end information of the PPDU matches the first OBSS information includes at least one of the following: a BSS color value in the PPDU is included in a BSS color value corresponding to a bit set to a first value in a bitmap of the BSS color value; the BSS color value in the PPDU is included in the first OBSS information; a partial BSSID in the PPDU is included in a partial BSSID corresponding to a bit set to the first value in a bitmap of the partial BSSID; and a MAC address of a transmit end of the PPDU is included in the first OBSS information.

For example, the first value is 1.

For other descriptions of the third aspect or the fourth aspect, refer to the first aspect or the second aspect. Details are not described herein again.

According to a fifth aspect, an embodiment of this application provides a first communication apparatus, configured to perform the method in the first aspect or any possible implementation. The first communication apparatus includes a module that performs the method in the first aspect, the third aspect, or any possible implementation.

According to a sixth aspect, an embodiment of this application provides a second communication apparatus, configured to perform the method in the second aspect or any possible implementation. The second communication apparatus includes a module that performs the method in the second aspect, the fourth aspect, or any possible implementation.

According to a seventh aspect, an embodiment of this application provides a first communication apparatus. The first communication apparatus includes a processor, configured to perform the method in the first aspect, the third aspect, or any possible implementation. The processor is configured to execute a program stored in a memory. When the program is executed, the method in the first aspect or any possible implementation is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated. For example, the first communication apparatus may be a chip.

In a possible implementation, the first communication apparatus further includes a transceiver. The transceiver is configured to receive information or send information.

According to an eighth aspect, an embodiment of this application provides a second communication apparatus. The second communication apparatus includes a processor, configured to perform the method in the second aspect, the fourth aspect, or any possible implementation. The processor is configured to execute a program stored in a memory. When the program is executed, the method in the second aspect, the fourth aspect, or any possible implementation is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated. For example, the second communication apparatus may be a chip.

In a possible implementation, the second communication apparatus further includes a transceiver. The transceiver is configured to receive information or send information.

According to a ninth aspect, an embodiment of this application provides a first communication apparatus. The first communication apparatus includes a logic circuit and an interface. The logic circuit is coupled to the interface. The interface is configured to input and/or output information. The logic circuit is configured to perform the method in the first aspect, the third aspect, or any possible implementation.

In a possible implementation, that the interface is configured to output the information includes: The interface is configured to output a first radio frame, and the like. That the interface is configured to input the information includes: The interface is configured to input a second radio frame, the interface is configured to input a third radio frame, and the like. For example, the logic circuit is configured to generate the first radio frame, and the like.

According to a tenth aspect, an embodiment of this application provides a second communication apparatus. The second communication apparatus includes a logic circuit and an interface. The logic circuit is coupled to the interface. The interface is configured to input and/or output information. The logic circuit is configured to perform the method in the second aspect, the fourth aspect, or any possible implementation.

In a possible implementation, that the interface is configured to input the information includes: The interface is configured to input a first radio frame, a second radio frame, and the like. That the interface is configured to output the information includes: The interface is configured to output a third radio frame, and the like. For example, the logic circuit is configured to determine, based on the first radio frame, information about a first OBSS that causes a first communication apparatus to switch a communication channel, and the like.

According to an eleventh aspect, an embodiment of this application provides a computer-readable storage medium. The computer-readable storage medium is configured to store a computer program. When the computer program is run on a computer, the method according to the first aspect, the second aspect, the third aspect, the fourth aspect, or any possible implementation is performed.

According to a twelfth aspect, an embodiment of this application provides a computer program product. The computer program product includes a computer program or computer code. When the computer program or the computer code is run on a computer, the method according to the first aspect, the second aspect, the third aspect, the fourth aspect, or any possible implementation is performed.

According to a thirteenth aspect, an embodiment of this application provides a computer program. When the computer program is run on a computer, the method according to the first aspect, the second aspect, the third aspect, the fourth aspect, or any possible implementation is performed.

According to a fourteenth aspect, an embodiment of this application provides a communication system. The communication system includes a first communication apparatus and a second communication apparatus.

In a possible implementation, the first communication apparatus is configured to perform the method according to the first aspect or any possible implementation of the first aspect, and the second communication apparatus is configured to perform the method according to the second aspect or any possible implementation of the second aspect.

In a possible implementation, the first communication apparatus is configured to perform the method in the third aspect or any possible implementation of the third aspect, and the second communication apparatus is configured to perform the method in the fourth aspect or any possible implementation of the fourth aspect.

### BRIEF DESCRIPTION OF DRAWINGS

FIG. 1a is a diagram of an architecture of a communication system according to an embodiment of this application;
FIG. 1b is a diagram of an architecture of another communication system according to an embodiment of this application;
FIG. 2 is a schematic flowchart of a communication method according to an embodiment of this application;
FIG. 3a is a diagram of a first information element according to an embodiment of this application;
FIG. 3b is a diagram of another first information element according to an embodiment of this application;
FIG. 4a is a diagram of still another first information element according to an embodiment of this application;
FIG. 4b is a diagram of yet another first information element according to an embodiment of this application;
FIG. 5a is a schematic flowchart of a communication method according to an embodiment of this application;
FIG. 5b is a schematic flowchart of a communication method according to an embodiment of this application;
FIG. 6 is a diagram of a structure of a communication apparatus according to an embodiment of this application;
FIG. 7 is a diagram of a structure of another communication apparatus according to an embodiment of this application; and
FIG. 8 is a diagram of a structure of still another communication apparatus according to an embodiment of this application.

### DESCRIPTION OF EMBODIMENTS

For ease of understanding technical solutions of this application, the following further describes this application with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

When a first communication apparatus detects that a primary channel is occupied by a station of another cell, the first communication apparatus may jump to another channel (for example, a non-primary channel) to perform channel contention. When the first communication apparatus jumps to the another channel (for example, the non-primary channel), but a second communication apparatus communicating with the first communication apparatus does not jump to the foregoing channel, and does not learn that the first communication apparatus has jumped to the channel, communication between a receive end and a transmit end cannot be implemented.

In view of this, embodiments of this application provide a communication method and apparatus, to effectively ensure that a first communication apparatus and a second communication apparatus can synchronously jump to another channel, thereby improving communication efficiency. In embodiments of this application, synchronously jumping to the another channel means that the first communication apparatus jumps to a second channel, and the second communication apparatus may also jump to the second channel. "Synchronization" shown in embodiments of this application is relative to "unsynchronization". For example, "unsynchronization" means that one of the first communication apparatus or the second communication apparatus jumps to the second channel, and the other apparatus is still on a first channel.

The following describes a communication system in embodiments of this application.

The technical solutions provided in embodiments of this application may be applied to a wireless local area network (wireless local area network, WLAN) system, for example, Wi-Fi. The method provided in embodiments of this application may be applied to institute of electrical and electronics engineers (institute of electrical and electronics engineers, IEEE) 802.11 series protocols such as the 802.11be protocol, the 802.11bn protocol, or a next-generation protocol of the 802.11bn protocol. Examples are not enumerated. The technical solutions provided in embodiments of this application may be further applied to a wireless personal area network (wireless personal area network, WPAN) based on millimeter wave (millimeter wave, MMW) and ultra-wideband (ultra-wideband, UWB) technologies. For example, the method provided in embodiments of this application may be applied to IEEE 802.15 series protocols such as the 802.15.4a protocol, the 802.15.4z protocol, the 802.15.4ab protocol, or a future-generation UWB WPAN protocol. Examples are not enumerated herein. The technical solutions provided in embodiments of this application may be further applied to the following communication systems such as an internet of things (internet of things, IoT) system, a vehicle to X (vehicle to X, V2X) system, a narrowband internet of things (narrowband internet of things, NB-IoT) system, a long term evolution (long term evolution, LTE) system, a 5th-generation (5th-generation, 5G) communication system, and a new communication system emerging in future communication development.

The WLAN system can provide high-rate and low-latency transmission. With continuous evolution of WLAN application scenarios, the WLAN system is to be applied to more scenarios or industries such as the internet of things industry, the internet of vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in smart city, a smart device (for example, a smart camera, a projector, a display, a television, a speaker, a refrigerator, or a washing machine) in smart home, a node in the internet of things, an entertainment terminal (for example, a wearable device such as augmented reality (augmented reality, AR) or virtual reality (virtual reality, VR)), a smart device (for example, a printer, a projector, a loudspeaker, or a speaker) in a smart office, an internet of vehicles device in the internet of vehicles, an infrastructure (for example, a vending machine, a self-service navigation console in a shopping mall or supermarket, a self-service cashier, or a self-service ordering machine) in a daily life scenario, a device in a large sports and music venue, or the like.

Although embodiments of this application mainly use a WLAN as an example, especially a network applied to IEEE 802.11 series standards, embodiments of this application may support Wi-Fi 8, which may also be referred to as ultra-high reliability (ultra-high reliability, UHR), ultra-high reliability and throughput (ultra-high reliability and throughput, UHRT), or the like. Examples are not enumerated herein. Various aspects in embodiments of this application may be extended to other networks that use various standards or protocols, for example, Bluetooth (Bluetooth), a high performance radio LAN (high performance radio LAN, HIPERLAN) (a wireless standard similar to the IEEE 802.11 standard), a wide area network (WAN), or other networks known or developed in the future.

In a possible implementation, the method provided in embodiments of this application may be implemented by a communication apparatus in the communication system. For example, the communication apparatus may be an access point (access point, AP) or a station (station, STA).

The AP is an apparatus having a wireless communication function, supports communication or sensing by using a WLAN protocol, has a function of communicating with or sensing another device (for example, a non-access point station (non-access point station, non-AP STA) or another access point) in a WLAN network, and certainly may further have a function of communicating with or sensing another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having the wireless communication function may be an entire device, or may be a chip, a processing system, a functional module, or the like installed in the entire device. The device in which the chip, the processing system, or the functional module is installed may implement a method, a function, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement a method and a function in embodiments of this application.

The STA is an apparatus having a wireless communication function, supports communication or sensing by using a WLAN protocol, and has a capability of communicating with or sensing another non-AP STA or access point in a WLAN. In a WLAN system, the station may be referred to as a non-access point station (non-access point station, non-AP STA). For example, the STA is any user communication device that allows a user to communicate with or sense the AP and then communicate with the WLAN. The apparatus having the wireless communication function may be an entire device, or may be a chip, a processing system, a functional module, or the like installed in the entire device. The device in which the chip, the processing system, or the functional module is installed may implement a method and a function in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Certainly, the STA may alternatively be a chip, a processing system, or a module in the foregoing devices in various forms, to implement a method and a function in embodiments of this application.

For example, a communication system to which the method provided in embodiments of this application may be applied may include an access point and a station. For example, embodiments of this application may be applied to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and a STA, between APs, or between STAs. The communication protocol may include IEEE 802.11 series protocols, for example, the 802.11n/802.11ac/802.11ax/802.11be/802.11bn protocol. Certainly, protocols subsequent to 802.11bn may also be supported.

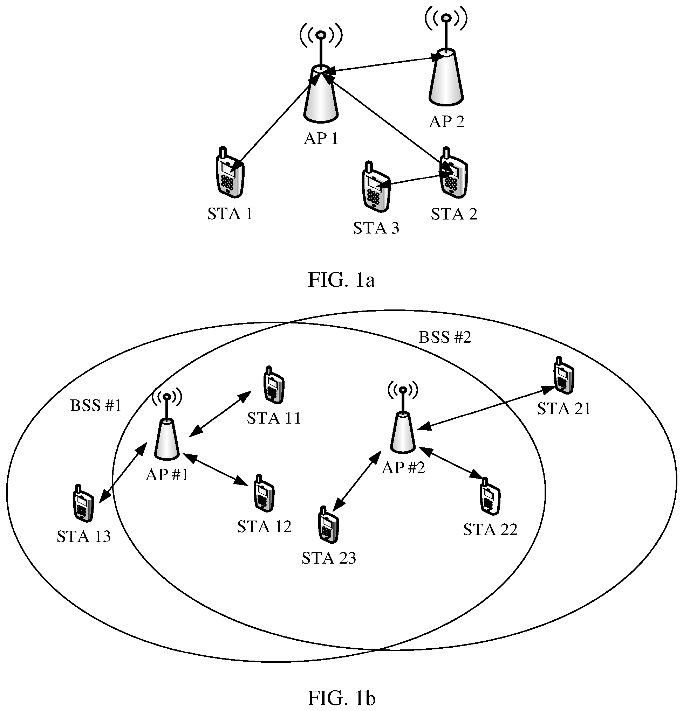

FIG. 1a is a diagram of an architecture of a communication system according to an embodiment of this application. The communication system may include one or more APs and one or more STAs. FIG. 1a shows one access point AP 1 and three stations STA 1, STA 2, and STA 3. For example, the method provided in embodiments of this application may be applied to data communication between one AP and one or more STAs (for example, communication between the AP 1 and the STA 1 or communication of the AP 1 with the STA 1 and the STA 2 shown in FIG. 1a), communication between APs (for example, communication between the AP 2 and the AP 1 shown in FIG. 1a), or communication between STAs (for example, communication between the STA 2 and the STA 3 shown in FIG. 1a). The method provided in embodiments of this application may be applied to but not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

In FIG. 1a, an example in which the STA is a mobile phone and the AP is a router is used. This does not mean that types of the AP and the STA in embodiments of this application are limited. In addition, FIG. 1a shows only one AP and three STAs as an example. There may be more or fewer APs or STAs. This is not limited in embodiments of this application.

FIG. 1b is a diagram of an architecture of another communication system according to an embodiment of this application. As shown in FIG. 1b, one BSS may include one AP and one or more STAs associated with or not associated with the AP. The communication system may further include a plurality of BSSs. FIG. 1b shows an example of two BSSs. Coverage areas of the two BSSs overlap. A BSS #1 includes an AP #1, a STA 11, a STA 12, and a STA 13, and a BSS #2 includes an AP #2, a STA 21, a STA 22, and a STA 23. Each BSS includes an AP and a plurality of STAs. In one BSS, data may be transmitted between the AP and each STA. The AP #1 and the AP #2 may also communicate with each other.

The BSS, a BSSID, a BSS color value, and a station may have the following relationship:

Each BSS may be identified by using one ID, for example, the BSSID. In other words, one BSSID may correspond to one BSS. For example, the BSSID may be carried in a MAC layer preamble, for example, a MAC header (MAC header), of a radio frame. Usually, the AP may set the BSSID to a MAC address of the AP. Each BSS may correspond to a plurality of STAs. As shown in FIG. 1b, the BSS #1 may correspond to the STA 11 to the STA 13, and the BSS #2 may correspond to the STA 21 to the STA 23.

Each BSS may also be identified by using the BSS color value. For example, the BSS color value may be carried in a physical layer preamble, for example, a PHY header (PHY header), of the radio frame.

An OBSS may be understood as that a BSS that operates on a same channel as a BSS of a station and that has a partially or completely overlapping basic service area is an OBSS of the station (OBSS: a BSS operating on the same channel as the STA's BSS and within (either partly or wholly) its basic service area). For example, for the STA 13 in the BSS #1, the BSS #2 is an OBSS of the STA 13, and any one of the STA 21 to the STA 23 or the AP #2 in the BSS #2 may be an OBSS station (or referred to as a station in the OBSS) of the STA 13. For another example, for the AP #1 in the BSS #1, the BSS #2 is an OBSS of the AP #1, and any one of the STA 21 to the STA 23 and the AP #2 in the BSS #2 may be an OBSS station of the AP #1. For another example, for the STA 22 in the BSS #2, the BSS #1 may be an OBSS of the STA 22, and any one of the STA 11 to the STA 13 or the AP #1 in the BSS #1 may be an OBSS station of the STA 22. For ease of description, all stations in the OBSS are briefly referred to as OBSS stations in embodiments of this application, but should not be construed as a limitation on embodiments of this application. For example, a station in a first OBSS is referred to as a first OBSS station, and a station in a second OBSS is referred to as a second OBSS station.

FIG. 1b shows two BSSs as an example. In a specific implementation, the OBSS may also be applied to more BSSs. For example, if three BSSs satisfy the foregoing descriptions about the OBSS, the method provided in embodiments of this application may also be applicable. For more BSSs, examples are not enumerated herein. With evolution of standards, another scenario similar to the OBSS may appear subsequently, or the OBSS may have another name. However, all scenarios having a function similar to the OBSS, and the like fall within the protection scope of embodiments of this application.

From different perspectives of sending a first radio frame and receiving the first radio frame, a first communication apparatus shown below may be understood as a communication apparatus that sends the first radio frame, and a second communication apparatus may be understood as a communication apparatus that receives the first radio frame. The first communication apparatus and the second communication apparatus belong to a same BSS. In an example, the first communication apparatus and the second communication apparatus may be Wi-Fi chips, functional modules, processing systems, or the like disposed in different Wi-Fi devices. In another example, the first communication apparatus may be an AP, and the second communication apparatus may be a non-AP STA. In still another example, both the first communication apparatus and the second communication apparatus may be non-AP STAs or APs. In still another example, the first communication apparatus may be a non-AP STA, and the second communication apparatus may be an AP. In another example, at least one of the first communication apparatus and the second communication apparatus may be a multi-link device (multi-link device, MLD), or the like. Examples are not enumerated in embodiments of this application. For example, the multi-link device (multi-link device, MLD) means that the device simultaneously has a plurality of stations (for example, APs or non-AP STAs), which operate on different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like installed in the entire device. The device in which the chip, the processing system, or the module is installed may implement a method and a function in embodiments of this application under control of the chip, the processing system, or the module. The multi-link device may implement wireless communication in compliance with 802.11 series protocols, to communicate with another device. The another device may be a multi-link device, or may not be a multi-link device. Frequency bands on which the multi-link device operates may include but are not limited to sub 1 GHz, 2.4 GHz, 5 GHz, 6 GHz, and the like. Examples are not enumerated herein.

For example, FIG. 1b is used as an example. The first communication apparatus may be the AP #1, the second communication apparatus may be any one of the STA 11 to the STA 13, and the OBSS station may be any station, for example, any one of the STA 21, the STA 22, the STA 23, or the AP #2, in the BSS #2. Alternatively, the first communication apparatus may be the AP #2, the second communication apparatus may be any one of the STA 21 to the STA 23, and the OBSS station may be any station, for example, any one of the STA 11, the STA 12, the STA 13, or the AP #1, in the BSS #1.

For example, the OBSS station may be one of two communication apparatuses that perform D2D communication, or the OBSS station may be one of two communication apparatuses that perform V2X communication. For ease of description, the OBSS station is used as an example for description in embodiments of this application.

In embodiments of this application, the method provided in embodiments of this application is described by using two sides: the first communication apparatus and the second communication apparatus. However, in a process in which the first communication apparatus and the second communication apparatus transmit a radio frame (for example, a first radio frame or a second radio frame), the radio frame may be further forwarded through another apparatus. For example, the radio frame between the first communication apparatus and the second communication apparatus is forwarded through a forwarding apparatus. An apparatus other than the first communication apparatus and the second communication apparatus is not limited in embodiments of this application.

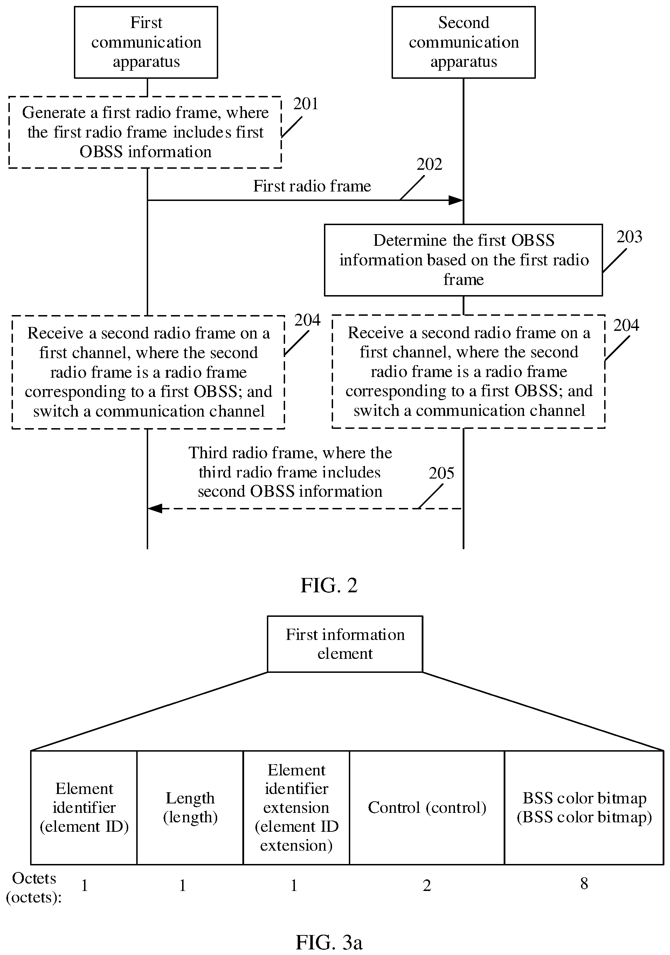

FIG. 2 is a schematic flowchart of a communication method according to an embodiment of this application. For related descriptions of a first communication apparatus and a second communication apparatus in the method, refer to FIG. 1a or FIG. 1b. Details are not described herein again. As shown in FIG. 2, the method includes the following steps.

In a possible implementation, the method shown in FIG. 2 may include step 201.

201: The first communication apparatus generates a first radio frame, where the first radio frame includes first OBSS information.

For example, the first OBSS information may indicate information about a first OBSS that causes the first communication apparatus to switch a communication channel. For example, because communication of a station in the first OBSS occupies a resource of a primary channel, the first communication apparatus needs to switch to another channel to communicate with another communication apparatus (for example, the second communication apparatus) of a BSS corresponding to the first communication apparatus.

Switching a communication channel may include at least one of the following: switching from a first channel to a second channel, performing signal monitoring on the second channel, performing channel contention on the second channel, and sending or receiving a radio frame on the second channel. The first channel may also be referred to as a communication channel before switching, and the second channel may also be referred to as a switched communication channel. Switching a communication channel in this embodiment of this application may also be referred to as jumping to another channel.

For example, a communication channel (for example, the first channel) before switching may be the primary channel (primary channel, PC). Usually, when the BSS is established, an AP may select a channel as a primary channel, and then the AP may send a beacon frame on the primary channel. A specific location of the primary channel is not limited in this embodiment of this application. For example, a bandwidth of the primary channel may be 20 MHz, and the location of the primary channel may be in an entire system bandwidth.

For example, the switched communication channel (for example, the second channel) may be a non-primary channel (non-primary channel, NPC). For example, the first channel may be the primary channel, and the second channel may be the non-primary channel. When the switched communication channel is the non-primary channel, switching a communication channel may also be referred to as performing a non-primary channel operation, performing non-primary channel transmission, or the like. A specific name of switching a communication channel is not limited in this embodiment of this application. For ease of description, in some implementations in the following, the non-primary channel operation is used as an example for description. Descriptions of the non-primary channel operation and descriptions of the non-primary channel transmission may be replaced with each other. For example, the first OBSS information may indicate information about a first OBSS that causes the first communication apparatus to perform a non-primary channel operation (or non-primary channel transmission).

The first OBSS information may indicate the information about the first OBSS. The first OBSS is an OBSS that causes the first communication apparatus to perform a non-primary channel operation, or the first OBSS is an OBSS that triggers the first communication apparatus to perform a non-primary channel operation, or the first OBSS is an OBSS that may cause the first communication apparatus to perform a non-primary channel operation, or the first OBSS is an OBSS that enables the first communication apparatus to perform a non-primary channel operation, or a PPDU sent by a first OBSS station causes/triggers/enables the first communication apparatus to perform a non-primary channel operation/perform non-primary channel transmission/perform channel switching. The first OBSS in this embodiment of this application is an example in one or more OBSSs indicated by the first OBSS information. For example, the first OBSS information may indicate information about a plurality of first OBSSs. A quantity of first OBSSs indicated by the first OBSS information is not limited in this embodiment of this application.

The first OBSS information may be information about an OBSS that may cause the first communication apparatus to perform a non-primary channel operation. For example, the first OBSS information may include information about a first OBSS that causes the first communication apparatus to perform a non-primary channel operation, or may include information about an OBSS that does not cause the first communication apparatus to perform a non-primary channel operation. A name of the first OBSS information shown in this embodiment of this application is merely an example. For example, the first OBSS information may also be referred to as OBSS station information, channel switching information, indication information, or neighboring cell information. Examples are not enumerated herein. For specific content of the first OBSS information, refer to the following descriptions. Details are not described herein again.

For example, the first communication apparatus may observe which first OBSS station sends a radio frame to cause the first communication apparatus to initiate a non-primary channel operation. In an example, if the first communication apparatus receives a radio frame sent by an OBSS station, the first communication apparatus may determine the OBSS station as the first OBSS station. In another example, after receiving a radio frame from an OBSS station, the first communication apparatus may determine the OBSS station as the first OBSS station based on at least one of the following information of the radio frame: a received signal strength indicator (received signal strength indicator, RSSI), a receive power, and a length. For example, if the RSSI of the radio frame is greater than a threshold A, it indicates that the OBSS station is the first OBSS station. For another example, if the length of the radio frame is greater than a threshold B, it indicates that the OBSS station is the first OBSS station. For another example, if the receive power of the radio frame is greater than a threshold C, it indicates that the OBSS station is the first OBSS station. The length of the radio frame may be represented by any one of the following: air interface transmission duration of the radio frame and an orthogonal frequency division multiplexing (orthogonal frequency division multiplexing, OFDM) symbol occupied by the radio frame. In still another example, the first communication apparatus may determine, based on a historical first OBSS station that causes the first communication apparatus to perform a non-primary channel operation, a current first OBSS station that causes the first communication apparatus to perform a non-primary channel operation. A specific method in which the first communication apparatus determines the first OBSS station that causes the first communication apparatus to perform a non-primary channel operation is not limited in this embodiment of this application. The foregoing is shown by using the first OBSS station as an example. In a specific implementation, the first communication apparatus may also determine the first OBSS that causes the first communication apparatus to perform a non-primary channel operation. Regardless of the first OBSS station or the first OBSS, the first communication apparatus may generate the first radio frame based on information such as related information (for example, information such as a BSS color value or a BSSID) of the first OBSS, related information (for example, information such as a BSS color value or a BSSID) of a BSS corresponding to the first OBSS station, or a MAC address of the first OBSS station.

For example, the first communication apparatus determines, based on predefined information or configuration information, an OBSS that causes the first communication apparatus to perform a non-primary channel operation. For example, the predefined information or the configuration information may indicate information about the OBSS that causes the first communication apparatus to perform a non-primary channel operation, for example, a BSS color value of the OBSS, a BSSID of the OBSS, or a MAC address of an OBSS station. In other words, the first OBSS information may be predefined information, or may be defined in a standard, or the like.

For example, the first radio frame may be a beacon frame, a probe response frame, a non-primary channel operation parameter request frame, or a non-primary channel operation parameter response frame. Examples are not enumerated herein. The non-primary channel operation parameter request frame may be used to request a parameter related to a non-primary channel operation, and the primary channel operation parameter response frame is a response frame of the request frame. The first radio frame may further include a communication parameter of a cell in which the first communication apparatus is located, and the like. Other content included in the first radio frame is not limited in this embodiment of this application. For example, when the first communication apparatus is an AP, the first radio frame may be a beacon frame, a probe response frame, or a non-primary channel operation parameter response frame.

202: The first communication apparatus sends the first radio frame. Correspondingly, the second communication apparatus receives the first radio frame.

For example, the first communication apparatus may send the first radio frame on a channel. For example, the channel may be the first channel. Whether a communication channel occupied when the first communication apparatus sends the first radio frame is the same as a communication channel (for example, the first channel) occupied when the first communication apparatus receives the second radio frame is not limited in this embodiment of this application.

203: The second communication apparatus determines the first OBSS information based on the first radio frame.

The first OBSS information shown in this embodiment of this application may be carried in a newly added element or field in the first radio frame, or the first OBSS information may be carried in a reserved bit in the first radio frame, or the first OBSS information may reuse an existing field or element, or the like in the first radio frame. An element or a field in which the first OBSS information is located is not limited in this embodiment of this application.

The following describes specific content of the first OBSS information.

The information about the first OBSS may include at least one of the following: BSS color (BSS color) information of the first OBSS, BSSID information of the first OBSS, and MAC address information of a station in the first OBSS. The following separately provides descriptions.

### Implementation 1:

The first OBSS information may include information (for example, BSS color information) related to a BSS color of the first OBSS. The BSS color may indicate a BSS color value of the first OBSS. The BSS color value shown in this embodiment of this application may also be referred to as a BSS color. A specific name is not limited in this embodiment of this application.

In an example, the BSS color information is a bitmap of the BSS color value, and each bit in the bitmap of the BSS color value corresponds to one BSS color value (or referred to as a BSS color). The value of each bit indicates whether the corresponding BSS color value (or referred to as a BSS color) is a BSS color value of the first OBSS that causes the first communication apparatus to switch a communication channel. Alternatively, the value of each bit indicates whether the corresponding BSS color is a BSS color of the first OBSS. Alternatively, the value of each bit indicates whether an OBSS indicated by the corresponding BSS color value causes the first communication apparatus to perform a non-primary channel operation.

Usually, one BSS color value may correspond to one BSS. For example, one OBSS may correspond to one BSS color value. Therefore, a bitmap of the BSS color may effectively indicate a specific OBSS that causes the first communication apparatus to perform a non-primary channel operation. The bitmap of the BSS color may be carried in the following first field.

A length of the BSS color value defined in the 802.11 standard is 6 bits, and a value range is 0 to 63. For example, the first radio frame may include one first field, the first field may be a bitmap field whose length is 64 bits (8 bytes), and each bit in the bitmap field corresponds to one BSS color value. For example, a 1^{st} bit (or referred to as a bit 0) in the bitmap field corresponds to a BSS color 0 (BSS color 0), a 2^{nd} bit (or referred to as a bit 1) corresponds to a BSS color 1 (BSS color 1), and by analogy, a 64^{th} bit (or referred to as a bit 63) corresponds to a BSS color 63 (BSS color 63). The 64 bits shown herein are merely examples. As evolution of standards, a length of a subsequent BSS color may be larger or smaller. As the length of the BSS color changes, a length of the bitmap shown in this embodiment of this application may also change.

For example, if a bit in the bitmap field is set to a first value, it indicates that a BSS color value corresponding to the bit is the BSS color value of the first OBSS. For another example, if a bit in the bitmap field is set to a second value, it indicates that a BSS color value corresponding to the bit is a BSS color value of an OBSS that does not cause the first communication apparatus to perform a non-primary channel operation. For example, the first value may be 1, and the second value may be 0.

For example, the first field may be carried in a first information element. The first information element may be used to carry a parameter related to a non-primary channel operation (or non-primary channel transmission). For example, the first information element may be referred to as a non-primary channel transmission parameter set information element (non-primary channel transmission parameter set element). FIG. 3a is a diagram of a first information element according to an embodiment of this application. As shown in FIG. 3a, the first information element may include at least one of the following fields: element identifier (element ID), length (length), element identifier extension (element ID extension), control (control), and BSS color bitmap (BSS color bitmap). For related descriptions of the BSS color bitmap, refer to the foregoing descriptions of the bitmap of the BSS color value. Details are not described herein again. The BSS color bitmap may also be referred to as a non-primary channel BSS color bitmap (NPC BSS color bitmap). A sequence and a length of each field shown in FIG. 3a are merely examples, and should not be construed as a limitation on this embodiment of this application.

The bitmap shown in this embodiment of this application may clearly indicate a specific OBSS (for example, one or more first OBSSs, or a PPDU of a specific OBSS station) that causes the first communication apparatus to perform a non-primary channel operation, and may further clearly indicate a specific OBSS that does not cause the first communication apparatus to perform a non-primary channel operation.

In another example, the BSS color information is one or more BSS color values, and the BSS color value is the BSS color value of the first OBSS, or a first OBSS indicated by each of the one or more BSS color values causes the first communication apparatus to perform a non-primary channel operation.

For example, the first radio frame may include one first field, the first field may indicate a BSS color list, and the BSS color list may include one or more BSS color values. When a BSS color value is carried in the first field, it indicates that the BSS color value is the BSS color value of the first OBSS.

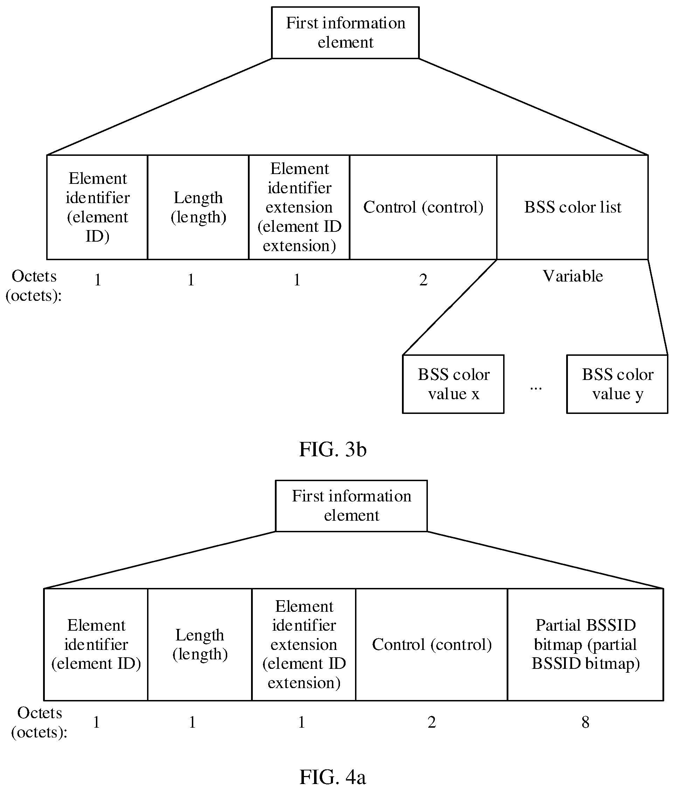

For example, the first field may be carried in the first information element. For other descriptions of the first information element, refer to the foregoing descriptions. Details are not described herein again. FIG. 3b is a diagram of another first information element according to an embodiment of this application. As shown in FIG. 3b, the first information element may include at least one of the following fields: element identifier (element ID), length (length), element identifier extension (element ID extension), control (control), and BSS color list. FIG. 3b shows an example of a BSS color value x and a BSS color value y in the BSS color list. x and y represent identifiers of the BSS color values. Specific values of x and y are not limited in this embodiment of this application. For example, the control field may include length indication information of the BSS color list, and the length indication information may indicate a length of the BSS color list, or may indicate a quantity of BSS color values in the BSS color list. A sequence and a length of each field shown in FIG. 3b are merely examples, and should not be construed as a limitation on this embodiment of this application.

### Implementation 2:

The first OBSS information may include BSSID information of an OBSS. For example, the BSSID information may be a bitmap of a partial BSSID. For example, the partial BSSID may be any m bits in a BSSID. For example, a length of the BSSID may be 48 bits, and m may be a positive integer less than 48. For example, a value of m may be equal to 6. For another example, a value of m may be equal to 4. Examples are not enumerated herein. Any m bits may be m consecutive bits in the BSSID, m non-consecutive bits, or the like. This is not limited in this embodiment of this application.

Because the BSSID information is the bitmap of the partial BSSID, and a length of the partial BSSID is m bits, a length of the bitmap of the partial BSSID may be equal to 2^{m} bits. Each bit corresponds to one partial BSSID, and a value of each bit indicates whether the corresponding partial BSSID is a partial BSSID of the first OBSS that causes the first communication apparatus to switch a communication channel.

For example, the first radio frame may include one second field, and the second field may indicate a bitmap (partial BSSID bitmap) of the partial BSSID. For example, the partial BSSID may be a 40^{th} bit to a 45^{th} bit in the BSSID, namely, BSSID [39:44]. When m=6, the partial BSSID may be any value between 0 and 63. Therefore, the second field may be a bitmap field whose length is 64 bits (8 bytes), and each bit in the bitmap field corresponds to one partial BSSID. For example, a 1^{st} bit (or referred to as a bit 0) in the bitmap field corresponds to a partial BSSID whose value is 0, a second bit (or referred to as a bit 1) corresponds to a partial BSSID whose value is 1, and by analogy, a 64^{th} bit (or referred to as a bit 63) corresponds to a partial BSSID whose value is 63.

For example, if a bit in the bitmap field is set to a first value, it indicates that a corresponding part of BSSID values are a part of BSSID values of the first OBSS. Alternatively, if a value of a corresponding bit in a partial BSSID bitmap corresponding to a part of BSSID values in a BSSID is the first value, it indicates that the BSSID value is the BSSID value of the first OBSS. For another example, if a bit in the bitmap field is set to a second value, it indicates that an OBSS indicated by a part of BSSID values corresponding to the bit does not cause the first communication apparatus to perform a non-primary channel operation. For example, the first value may be 1, and the second value may be 0.

For example, the second field may be carried in the first information element. For other descriptions of the first information element, refer to the foregoing descriptions. Details are not described herein again. FIG. 4a is a diagram of still another first information element according to an embodiment of this application. As shown in FIG. 4a, the first information element may include at least one of the following fields: element identifier (element ID), length (length), element identifier extension (element ID extension), control (control), and partial BSSID bitmap. For related descriptions of the partial BSSID bitmap, refer to the foregoing descriptions. Details are not described herein again. The partial BSSID bitmap may also be referred to as a non-primary channel partial BSSID bitmap (NPC partial BSSID bitmap). A sequence and a length of each field shown in FIG. 4a are merely examples, and should not be construed as a limitation on this embodiment of this application.

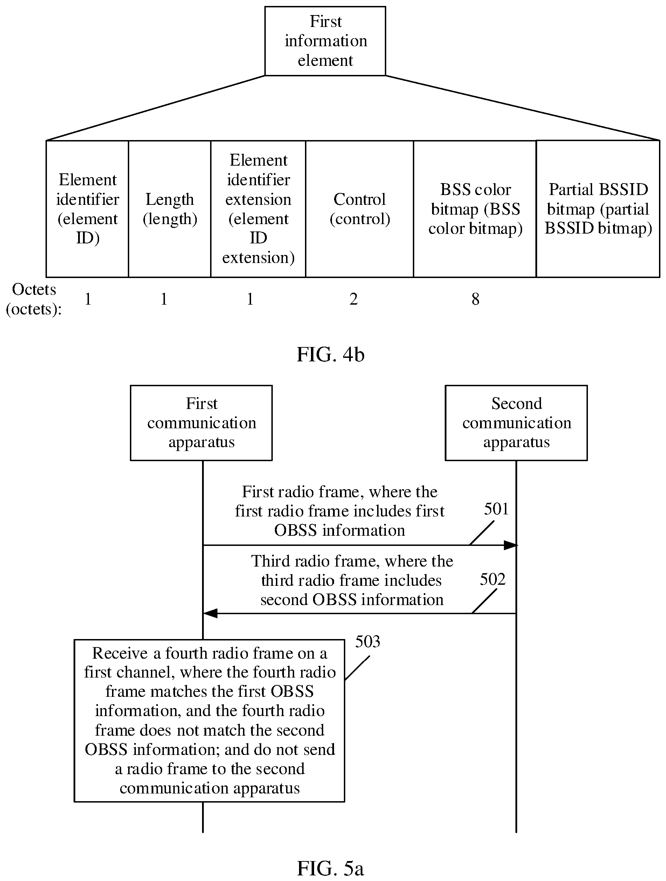

With reference to the BSS color bitmap shown above, FIG. 4b is a diagram of still another first information element according to an embodiment of this application. As shown in FIG. 4b, the first information element may include BSS color bitmap and partial BSSID bitmap. For related descriptions of FIG. 4b, refer to the foregoing descriptions. Details are not described herein again.

### Implementation 3:

The first OBSS information includes MAC address information of the first OBSS station. For example, the first OBSS information may include MAC address information of one or more first OBSS stations. The MAC address information included in the first OBSS information is a MAC address of a first OBSS station that causes the first communication apparatus to perform non-primary channel transmission after the first communication apparatus receives a radio frame (including a management frame or a data frame) sent by the first OBSS station. As described above, the first communication apparatus may observe which OBSS station (for example, one or more first OBSS stations) sends a radio frame to cause the first communication apparatus to initiate a non-primary channel operation, and then use the first radio frame to carry a MAC address of the OBSS station.

Certainly, the first OBSS information may further include IP address information of the first OBSS station, or other information used to identify the first OBSS station, and the like. Examples are not enumerated herein.

All examples in Implementation 1 to Implementation 3 may be combined with each other. For example, the first radio frame may include the bitmap of the BSS color value and the BSS color list, or the first radio frame may include the bitmap of the BSS color value and the bitmap of the partial BSSID. Specific manners of combinations are enumerated herein.

In a possible implementation, the method shown in FIG. 2 may further include step 204.

204: The first communication apparatus receives a second radio frame on the first channel, where the second radio frame is a radio frame corresponding to the first OBSS; and the first communication apparatus switches a communication channel. The second communication apparatus receives the second radio frame on the first channel. The second radio frame is a radio frame corresponding to the first OBSS. The second communication apparatus switches a communication channel.

For related descriptions of switching a communication channel, refer to step 201. Details are not described herein again.

For example, step 204 may alternatively be: The first communication apparatus/the second communication apparatus receives the second radio frame on the first channel, and switches a communication channel based on the information about the first OBSS. Alternatively, the first communication apparatus/the second communication apparatus receives the second radio frame, and switches a communication channel based on the second radio frame and the information about the first OBSS. Alternatively, the first communication apparatus/the second communication apparatus receives a radio frame, and the first communication apparatus/the second communication apparatus may switch a communication channel only when the radio frame is a radio frame corresponding to the first OBSS. In this embodiment of this application, that the second radio frame is a radio frame corresponding to the first OBSS may alternatively be that transmit end information of the second radio frame matches the first OBSS information. For example, OBSS information carried in the second radio frame matches the first OBSS in the first radio frame, or the second radio frame is a radio frame sent by the first OBSS station. For example, that the second radio frame is a radio frame corresponding to the first OBSS may be mutually replaced with that the transmit end information of the second radio frame matches the first OBSS information, or the second radio frame is a radio frame sent by the first OBSS station.

For example, the first communication apparatus (or the second communication apparatus) receives the second radio frame, and the first communication apparatus (or the second communication apparatus) may switch a communication channel (for example, perform a non-primary channel operation) when at least one of the following conditions is met: Condition 1: The transmit end information of the second radio frame (namely, information about a transmit end of the second radio frame) matches the first OBSS information. Condition 2: An RSSI of the second radio frame is greater than or equal to an RSSI threshold. Condition 3: A length of the second radio frame is greater than or equal to a length threshold. A station (for example, the first communication apparatus or the second communication apparatus) may perform a non-primary channel operation when receiving a second radio frame and the second radio frame meets at least one of Condition 1 to Condition 3. The second radio frame may be a physical layer (physical layer, PHY) protocol data unit (PHY protocol data unit, PPDU) or a medium access control (medium access control, MAC) protocol data unit (MAC protocol data unit, MPSU). The following uses the PPDU as an example to describe the second radio frame in specific examples, but this should not be construed as a limitation on this embodiment of this application.

If a met condition is Condition 1, when Condition 1 is met, the first communication apparatus and the second communication apparatus may perform a non-primary channel operation. When Condition 1 is not met, for example, transmit end information obtained from the PPDU does not match the first OBSS information, the first communication apparatus (or the second communication apparatus) cannot perform a non-primary channel operation. In other words, only when Condition 1 is met, the first communication apparatus and the second communication apparatus may perform a non-primary channel operation. For another example, met conditions are Condition 1 and Condition 2, or met conditions may be Condition 1 and Condition 3, or met conditions are Condition 1 to Condition 3, or a met condition may be Condition 2 or Condition 3. When a PPDU received by a STA meets the foregoing met condition, the STA may perform a non-primary channel operation; or when a PPDU received by a STA does not meet the foregoing met condition, the STA does not perform a non-primary channel operation.

Because the first radio frame received by the second communication apparatus is sent by the first communication apparatus, the first communication apparatus and the second communication apparatus can have consistent understanding of the first OBSS information. When both the first communication apparatus and the second communication apparatus receive the PPDU from the first OBSS station, and the first OBSS information indicates that the first OBSS station causes the first communication apparatus to perform a non-primary channel operation, both the first communication apparatus and the second communication apparatus may perform a non-primary channel operation, for example, both jump to the second channel to perform signal monitoring, or send or receive a radio frame.

The following describes Condition 1 to Condition 3 in detail.

Descriptions of Condition 1 are as follows:
Implementation 1 is used as an example. A BSS color value obtained by the STA (for example, the first communication apparatus or the second communication apparatus) from the PPDU matches the first OBSS information, or a BSS color value obtained from the PPDU is included in the first OBSS information. The STA may perform a non-primary channel operation. For example, when receiving a PPDU carrying a BSS color value, the STA may determine, based on the BSS color value, a specific BSS that the PPDU is from. If the PPDU is from the first OBSS, the STA may perform a non-primary channel operation. For example, the first communication apparatus receives a PPDU, the first communication apparatus finds, by parsing the PPDU, that a BSS color value carried in the PPDU is a BSS color value corresponding to a bit set to 1 in the bitmap of the BSS color value, and the first communication apparatus may perform a non-primary channel operation. The related descriptions of the first communication apparatus herein is also applicable to the second communication apparatus. For example, the second communication apparatus receives the PPDU, a BSS color value obtained from the PPDU matches the first OBSS information, and the second communication apparatus may perform a non-primary channel operation. For example, the second communication apparatus receives a PPDU, the second communication apparatus finds, by parsing the PPDU, that a BSS color value carried in the PPDU is a BSS color value corresponding to a bit set to 1 in the bitmap of the BSS color value, and the second communication apparatus may perform a non-primary channel operation. Usually, a preamble of a radio frame may carry transmit end information. The transmit end information may include but is not limited to a BSS color value, a BSSID, a length of the radio frame, a MAC address of a transmit end of the radio frame, and the like.
Implementation 2 is used as an example. A BSSID obtained by the STA (for example, the first communication apparatus or the second communication apparatus) from the PPDU matches the first OBSS information, or a BSSID obtained from the PPDU is included in the first OBSS information. The STA may perform a non-primary channel operation. For example, the first communication apparatus performs a non-primary channel operation when receiving the PPDU sent by the first OBSS station in the BSS (namely, the first OBSS) corresponding to the BSSID indicated by the first OBSS information. For example, the first communication apparatus receives the PPDU, and parses the PPDU to obtain a value of the BSSID (in other words, a station that sends the PPDU is from the BSSID of the BSS). The first communication apparatus performs a non-primary channel operation if m bit values of the BSSID are a partial BSSID corresponding to a bit set to 1 in the bitmap of the partial BSSID. The related descriptions of the first communication apparatus herein is also applicable to the second communication apparatus. Specific descriptions of the second communication apparatus are not described herein again.
Implementation 3 is used as an example. A MAC address of a transmit end of the PPDU is included in the first OBSS information, and the first communication apparatus may perform a non-primary channel operation. For example, after receiving the first radio frame, the second communication apparatus may obtain the MAC address of the first OBSS station from the first radio frame. When receiving the PPDU, the second communication apparatus can initiate a non-primary channel operation only when finding that a MAC address of a station that sends the PPDU is carried in the first radio frame.

In this embodiment of this application, when both the first communication apparatus and the second communication apparatus receive the PPDU, the transmit end information obtained from the PPDU matches the first OBSS information, and the first communication apparatus and the second communication apparatus may jump to the second channel. For example, signal monitoring is performed on the second channel, or channel contention is performed on the second channel, or a radio frame is sent or received on the second channel.

Descriptions of Condition 2 are as follows:
An RSSI of the PPDU received by the first communication apparatus is greater than or equal to the RSSI threshold, and the first communication apparatus performs a non-primary channel operation. An RSSI of the PPDU received by the second communication apparatus is greater than or equal to the RSSI threshold, and the second communication apparatus performs a non-primary channel operation. Condition 1 and Condition 2 are combined. When the met conditions are the condition 1 and Condition 2, the first communication apparatus performs a non-primary channel operation only when the transmit end information obtained by the first communication apparatus from the received PPDU matches the first OBSS information, and the RSSI of the PPDU is greater than or equal to the RSSI threshold. The second communication apparatus performs a non-primary channel operation only when the transmit end information obtained by the second communication apparatus from the received PPDU matches the first OBSS information, and the RSSI of the PPDU is greater than or equal to the RSSI threshold. A combination of Condition 2 and Condition 3 or a combination of Condition 1 to Condition 3 is not described in detail herein.

In an example, the first radio frame further includes information about the RSSI threshold. The RSSI threshold may indicate an RSSI threshold of the PPDU sent by the first OBSS station (or indicate an RSSI threshold of a PPDU sent by the first OBSS station). After receiving the PPDU sent by the first OBSS station, the first communication apparatus or the second communication apparatus may determine, based on the RSSI of the PPDU, whether to initiate a non-primary channel operation. For example, when the RSSI of the received PPDU is greater than the RSSI threshold, a non-primary channel operation can be initiated. For example, the RSSI threshold may be any value in the following value range [-82 dBm, -72 dBm].

For example, the information about the RSSI threshold may be a third field, and the third field may carry the RSSI threshold, or the third field may carry a reference value. The first communication apparatus or the second communication apparatus may determine the RSSI threshold based on the reference value and a fixed value. For example, if a fixed value is -82 dBm, the RSSI threshold can be equal to -82 plus the reference value. For another example, if a fixed value is -72 dBm, the RSSI threshold may be equal to -72 minus the reference value. Examples are not enumerated herein. The fixed value may be defined in a standard, broadcast by an AP, or the like. This is not limited in this embodiment of this application. The reference value may be a positive number, or may be a negative number. This is not limited in this embodiment of this application.

For another example, the third field may be an index of the RSSI threshold. For example, the first communication apparatus or the second communication apparatus may prestore indexes corresponding to different RSSI thresholds. After the third field is received, the RSSI threshold may be determined based on the stored indexes corresponding to different RSSI thresholds and the third field. For example, the third field may occupy 3 bits or 4 bits. For example, when the third field occupies 4 bits, a value of the third field may be a value between 0 and 10, and a value between 11 and 15 is an invalid value.

In another example, the RSSI threshold may be a fixed value. For example, the RSSI threshold may be -72 dBm or -82 dBm. Examples are not enumerated herein. For example, the RSSI threshold may be defined in a standard, broadcast by an AP, or the like. This is not limited in this embodiment of this application. For example, when the RSSI threshold is broadcast by the AP, the AP can select a value from the following value range [-82 dBm, -72 dBm] as the RSSI threshold.

The enumerated RSSI threshold is merely an example, and a specific value is not limited in this embodiment of this application.

Descriptions of Condition 3 are as follows:
A length of the PPDU received by the first communication apparatus is greater than or equal to the length threshold, and the first communication apparatus performs a non-primary channel operation. A length of the PPDU received by the second communication apparatus is greater than or equal to the length threshold, and the second communication apparatus performs a non-primary channel operation. Condition 1 and Condition 3 are combined. When the met conditions are Condition 1 and Condition 3, the STA (the first communication apparatus or the second communication apparatus) performs a non-primary channel operation only when the transmit end information obtained by the STA from the received PPDU matches the first OBSS information, and the length of the PPDU is greater than or equal to the length threshold. For example, when receiving the PPDU sent by the first OBSS station, the first communication apparatus or the second communication apparatus obtains the length of the PPDU from the preamble of the PPDU. If the length of the PPDU is greater than or equal to the length threshold, the first communication apparatus or the second communication apparatus may perform a non-primary channel operation.

In an example, the first radio frame further includes information about the length threshold. The length threshold may indicate the length threshold of the PPDU sent by the first OBSS station, or the length threshold may indicate the length threshold of the PPDU sent by the first OBSS station. For an indication manner of the length threshold, refer to the foregoing descriptions of the RSSI threshold. Details are not described herein again.

In another example, the length threshold may be a fixed value. For example, the length threshold may be defined in a standard, broadcast by an AP, or the like. This is not limited in this embodiment of this application.

In this embodiment of this application, after switching to the second channel, the first communication apparatus and the second communication apparatus may jump back to an original primary channel (for example, the first channel) before the first OBSS station ends sending of the PPDU. After jumping back to the first channel, the first communication apparatus and the second communication apparatus may continue to communicate on the first channel. For example, the length of the PPDU sent by the first OBSS station may affect communication duration of a non-primary channel. Therefore, the length threshold is set, to effectively ensure necessity for the first communication apparatus and the second communication apparatus to jump to the second channel, and ensure that the two communication apparatuses can effectively communicate on the non-primary channel.

In this embodiment of this application, the first communication apparatus may update the first OBSS information when the transmit end information (for example, the transmit end is a station A) corresponding to the PPDU received by the first communication apparatus does not match the first OBSS information. For example, the first communication apparatus may determine that the transmit end (for example, the station A) is the first OBSS station. In other words, when the transmit end of the PPDU is not the first OBSS station indicated in the first radio frame, the first communication apparatus may update the first OBSS indicated in the first OBSS information, and send new first OBSS information to the second communication apparatus. A name of the new first OBSS information shown herein is merely an example. In this embodiment of this application, the name is shown relative to the first OBSS information existing before updating. In other words, relative to the first OBSS information existing before updating, updated first OBSS information may be referred to as the new first OBSS information. The new first OBSS information may be sent through a beacon frame, or may be sent through another type of radio frame, or the like. Examples are not enumerated herein. A type of a radio frame carried in the new first OBSS information may be the same as or different from a type of a radio frame carried in the first OBSS information (for example, the first OBSS information existing before updating or the old first OBSS information). This is not limited in this embodiment of this application.

In this embodiment of this application, information about the second channel may be carried in the first radio frame, or information about the second channel may be broadcast by the AP, or the like. A specific location of the second channel is not limited in this embodiment of this application.

In a possible implementation, the method shown in FIG. 2 may further include step 205.

205: The second communication apparatus sends a third radio frame. Correspondingly, the first communication apparatus receives the third radio frame. The third radio frame includes second OBSS information.

For example, the second OBSS information indicates information about a second OBSS that causes the second communication apparatus to switch a communication channel.

In this embodiment of this application, the first OBSS may be the same as or different from the second OBSS. This is not limited in this embodiment of this application. For example, at least one of a plurality of first OBSSs may be the same as at least one of a plurality of second OBSSs.

For related descriptions of the second OBSS information, refer to the descriptions of the first OBSS information. Details are not described herein again. For example, the second OBSS information may include at least one of the following: BSS color (BSS color) information of a second OBSS, BSSID information of the second OBSS, and MAC address information of a second OBSS station. For related descriptions of the BSS color information of the second OBSS, refer to Implementation 1. For related descriptions of the BSSID information of the second OBSS, refer to Implementation 2. For related descriptions of the MAC address information of the second OBSS station, refer to Implementation 3.

For example, the third radio frame may be a probe request frame, a non-primary channel operation parameter request frame, or a non-primary channel operation parameter response frame. Examples are not enumerated herein. For example, when the second communication apparatus is a non-AP STA, the third radio frame may be a probe request frame or a non-primary channel operation parameter request frame.

Before sending the third radio frame, the second communication apparatus may further generate the third radio frame. For example, the second communication apparatus may observe which second OBSS station sends a radio frame to cause the second communication apparatus to perform a non-primary channel operation. For specific descriptions of generating the third radio frame, refer to step 201. Details are not described herein again.

After receiving the third radio frame, the first communication apparatus may further determine the information about the second OBSS based on the third radio frame.

The steps shown in this embodiment of this application may be combined with each other, or the steps (or the implementations, the examples, or the like) may be separately described as an embodiment. For specific descriptions in which each step is separately described as an embodiment, refer to the foregoing descriptions. Details are not described herein again. The following shows an example of a combined embodiment:

For example, step 202 and step 203 may be combined into an embodiment. According to this embodiment, the second communication apparatus may effectively learn of the information about the first OBSS that causes the first communication apparatus to perform a non-primary channel operation. Therefore, the second communication apparatus may effectively learn of when the first communication apparatus performs a non-primary channel operation. The second communication apparatus may keep consistent with the first communication apparatus. For example, the second communication apparatus and the first communication apparatus synchronously jump to the non-primary channel for communication.

For another example, step 202 and step 204 (or step 202 to step 204) may be combined into an embodiment. According to this embodiment, the second communication apparatus may not only obtain the information about the first OBSS, but also switch a communication channel when receiving the PPDU sent by the first OBSS station. The first communication apparatus switches a communication channel when receiving the PPDU sent by the first OBSS station. In this way, it can be effectively ensured that both the first communication apparatus and the second communication apparatus switch a communication channel, to implement communication between two communication parties.

For another example, step 202 and step 205 (or step 202, step 203, and step 205) may also be combined into an embodiment. For specific descriptions of this embodiment, refer to the following descriptions. Details are not described herein again. For another example, step 202, step 204, and step 205 (or step 202 to step 205) may also be combined into an embodiment. In this case, the third radio frame may be transmitted on the second channel, or the third radio frame may be transmitted on the first channel after the first communication apparatus and the second communication apparatus jump from the second channel to the first channel. A communication channel occupied when the second communication apparatus sends the third radio frame is not limited in this embodiment of this application. For other descriptions of this embodiment, refer to the following descriptions. In this embodiment of this application, after the first communication apparatus initiates a non-primary channel operation because of a PPDU sent by a specific OBSS station, the first communication apparatus may learn of a specific second communication apparatus that initiates a non-primary channel operation because of the PPDU sent by the current OBSS station, to communicate with the second communication apparatus when performing non-primary channel transmission.

A quantity of execution times or a specific sequence of the foregoing steps is not limited in this embodiment of this application.

The following describes an embodiment in which step 202 and step 205 are combined. For other descriptions in the following combined embodiments, refer to the foregoing descriptions. For example, for descriptions in which transmit end information of a fourth radio frame matches the first OBSS information, refer to FIG. 2. Details are not described herein again. The following does not show Condition 2 or Condition 3 in specific examples, but this should not be understood as a limitation on this embodiment of this application.

In this embodiment of this application, for example, the radio frame received by the STA is the fourth radio frame. The STA shown herein may be the first communication apparatus, or may be the second communication apparatus. The following separately provides descriptions based on content of the fourth radio frame.

For example, the STA may switch a communication channel when at least one of the following conditions is met: Condition 1: The transmit end information of the fourth radio frame matches the first OBSS information. Condition 2: The RSSI of the second radio frame is greater than or equal to the RSSI threshold. Condition 3: The length of the second radio frame is greater than or equal to the length threshold. Condition 4: The transmit end information of the fourth radio frame matches the second OBSS information. The following describes an example of a condition for switching a communication channel by the STA.

In an example, the transmit end information of the fourth radio frame matches the first OBSS information, and the STA performs a non-primary channel operation. In this embodiment, if the transmit end information of the fourth radio frame matches the first OBSS information, both the first communication apparatus and the second communication apparatus may perform a non-primary channel operation. In other words, regardless of whether the transmit end information of the fourth radio frame matches the second OBSS information, provided that the transmit end information of the fourth radio frame does not match the first OBSS information, neither the first communication apparatus nor the second communication apparatus performs a non-primary channel operation. For specific descriptions of this embodiment, refer to the foregoing descriptions of FIG. 2. Details are not described herein again. Herein, an example in which the met condition is Condition 1 is shown. Certainly, for whether the STA performs a non-primary channel operation, not only Condition 1 needs to be met, but also Condition 2, Condition 3, or the like may be combined. Conditions that are met when the STA performs a non-primary channel operation are not described in detail herein.

In another example, the transmit end information of the fourth radio frame matches the first OBSS information, the transmit end information of the fourth radio frame does not match the second OBSS information, and the first communication apparatus (for example, the AP) may not send a radio frame to the second communication apparatus (non-AP STA). FIG. 5a is a schematic flowchart of a communication method according to an embodiment of this application. As shown in FIG. 5a, the method includes the following steps.

For related descriptions of step 501 in FIG. 5a, refer to descriptions of step 202. For related descriptions of step 502, refer to descriptions of step 205. Details are not described herein again.

503: A first communication apparatus receives a fourth radio frame on a first channel, where the fourth radio frame matches first OBSS information, and the fourth radio frame does not match second OBSS information. In this case, the first communication apparatus does not send a radio frame to a second communication apparatus.

For example, because the fourth radio frame matches the first OBSS information, when a met condition is Condition 1, the first communication apparatus may perform a non-primary channel operation. Whether the second communication apparatus performs a non-primary channel operation is not limited in this embodiment of this application.

According to this embodiment of this application, the first communication apparatus can effectively learn of information about a second OBSS, and the second communication apparatus can effectively learn of information about a first OBSS. Therefore, the first communication apparatus can effectively learn of a case in which the second communication apparatus performs a non-primary channel operation, and the second communication apparatus can effectively learn of a case in which the first communication apparatus performs a non-primary channel operation. Therefore, when this embodiment of this application is applicable to a communication or sensing scenario between one AP and a plurality of non-AP STAs, the AP may effectively learn, based on the first OBSS information and the second OBSS information, a specific non-AP STA to which the AP may send a radio frame, so that the AP can choose to communicate with a non-AP STA on a same non-primary channel as the AP, thereby further improving communication efficiency.

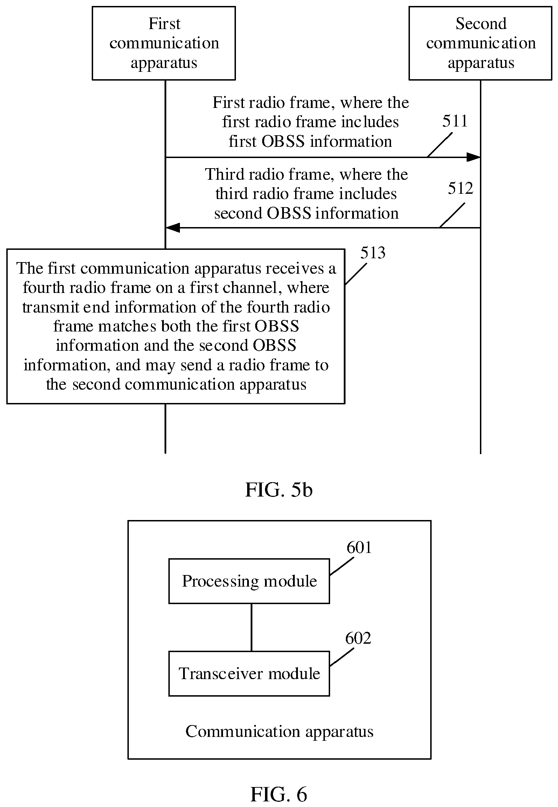

In still another example, the transmit end information of the fourth radio frame matches the first OBSS information, and also matches the second OBSS information, and the STA performs a non-primary channel operation. For example, in this embodiment, the met condition may include that the transmit end information of the fourth radio frame matches both the first OBSS information and the second OBSS information. Certainly, the met condition shown herein may also include Condition 2, Condition 3, or the like. For descriptions of Condition 2 and Condition 3, refer to the foregoing descriptions. Details are not described herein again. FIG. 5b is a schematic flowchart of a communication method according to an embodiment of this application. As shown in FIG. 5b, the method includes: For related descriptions of step 511 in FIG. 5b, refer to descriptions of step 202. For related descriptions of step 512, refer to descriptions of step 205. Details are not described herein again.

513: Receive a fourth radio frame on a first channel, where transmit end information of the fourth radio frame matches both first OBSS information and second OBSS information, and a first communication apparatus may send a radio frame to a second communication apparatus.

A BSS corresponding to a transmit end of the fourth radio frame belongs to both a first OBSS and a second OBSS, and the first communication apparatus and the second communication apparatus may switch a communication channel. In other words, at least one of one or more first OBSSs that cause the first communication apparatus to switch a communication channel also causes the second communication apparatus to switch a communication channel. Alternatively, a radio frame sent by an OBSS station (for example, the transmit end in step 513) causes the first communication apparatus to perform a non-primary channel operation and also causes the second communication apparatus to perform a non-primary channel operation. In this embodiment, a STA may perform a non-primary channel operation only when the transmit end information of the fourth radio frame matches both the first OBSS information and the second OBSS information. Therefore, after the first communication apparatus and the second communication apparatus perform a non-primary channel operation, the first communication apparatus may send a radio frame to the second communication apparatus, thereby further improving communication efficiency.

In still another example, the transmit end information of the fourth radio frame does not match the first OBSS information, and the first communication apparatus updates the first OBSS information.

In still another example, the transmit end information of the fourth radio frame does not match the second OBSS information, and the second communication apparatus may update the second OBSS information.

For other descriptions of the examples shown above, refer to FIG. 2. Details are not described herein again.

In the foregoing embodiments, the first radio frame may further include a delay of switching a communication channel by the first communication apparatus. The first communication apparatus indicates the delay of switching a communication channel by the first communication apparatus, so that when the second communication apparatus needs to send a radio frame to the first communication apparatus on the second channel, the delay may be considered. For example, the radio frame is sent after the delay. In this way, it is ensured that the first communication apparatus can receive the radio frame in a timely manner, thereby improving communication efficiency.

In the foregoing embodiments, the third radio frame may further include a delay of switching a communication channel by the second communication apparatus. The second communication apparatus indicates the delay of switching a communication channel by the second communication apparatus, so that when the first communication apparatus needs to send a radio frame to the second communication apparatus on the second channel, the delay may be considered. For example, the radio frame is sent after the delay. In this way, it is ensured that the second communication apparatus can receive the radio frame in a timely manner, thereby improving communication efficiency.

In this embodiment of this application, the first communication apparatus sends the first OBSS information, so that a second communication apparatus can effectively learn, based on the first OBSS information, of the first OBSS that causes the first communication apparatus to switch a communication channel. In this way, when both the first communication apparatus and the second communication apparatus receive the radio frame from the station in the first OBSS, the second communication apparatus can effectively learn of whether the first communication apparatus switches a communication channel. This ensures that the first communication apparatus and the second communication apparatus can synchronously switch a communication channel, so that the first communication apparatus and the second communication apparatus can perform communication on a same communication channel, thereby improving communication efficiency.

The following describes communication apparatuses provided in embodiments of this application.

In this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into modules is an example, and is merely a logical functional division. In an actual implementation, another division manner may be used. The following describes in detail the communication apparatuses in embodiments of this application with reference to FIG. 6 to FIG. 8.

FIG. 6 is a diagram of a structure of a communication apparatus according to an embodiment of this application. As shown in FIG. 6, the communication apparatus includes a processing module 601 and a transceiver module 602. The transceiver module 602 may implement a corresponding communication function, and the processing module 601 is configured to perform data processing. For example, the transceiver module 602 may also be referred to as an interface, a communication interface, or a communication module.

In some embodiments of this application, the communication apparatus may be configured to perform actions performed by the first communication apparatus in the foregoing method embodiments. In this case, the communication apparatus may be a Wi-Fi device, or a component (for example, a chip, a system, or a functional module) configured in the Wi-Fi device. The transceiver module 602 is configured to perform a receiving/sending-related operation of the first communication apparatus in the foregoing method embodiments, and the processing module 601 is configured to perform a processing-related operation of the first communication apparatus in the foregoing method embodiments.

The processing module 601 is configured to generate a first radio frame. The first radio frame includes first OBSS information. For example, the first OBSS information indicates information about a first OBSS that causes the first communication apparatus to switch a communication channel. The transceiver module 602 is configured to send or output the first radio frame.

For example, the transceiver module 602 is further configured to receive or input a second radio frame. The second radio frame is a radio frame sent by a first OBSS station. The processing module 601 is configured to switch a communication channel (for example, perform a non-primary channel operation or perform non-primary channel transmission).

For example, the transceiver module 602 is further configured to receive or input a third radio frame. The third radio frame includes second OBSS information. For example, the second OBSS information indicates information about a second OBSS that causes a second communication apparatus to switch a communication channel.

For example, the transceiver module 602 is further configured to receive or input a fourth radio frame.

Still as shown in FIG. 6, in some other embodiments of this application, the communication apparatus may be configured to perform actions performed by the second communication apparatus in the foregoing method embodiments. In this case, the communication apparatus may be a Wi-Fi device, or a component (for example, a chip, a system, or a functional module) configured in the Wi-Fi device. The transceiver module 602 is configured to perform a receiving/sending-related operation of the second communication apparatus in the foregoing method embodiments, and the processing module 601 is configured to perform a processing-related operation of the second communication apparatus in the foregoing method embodiments.

The transceiver module 602 is configured to receive or input a first radio frame. The first radio frame includes first OBSS information, and the first OBSS information indicates information about a first OBSS that causes a first communication apparatus to switch a communication channel. The processing module 601 is configured to determine, based on the first radio frame, the information about the first OBSS that causes the first communication apparatus to switch a communication channel.

For example, the transceiver module 602 is further configured to receive or input a second radio frame. The second radio frame is a radio frame sent by a first OBSS station. The processing module 601 is configured to switch a communication channel.

For example, the transceiver module 602 is further configured to send or output a third radio frame. The third radio frame includes second OBSS information. The second OBSS information indicates information about a second OBSS that causes the second communication apparatus to switch a communication channel.

For example, the transceiver module 602 is further configured to receive or input a fourth radio frame.

Optionally, in the foregoing embodiments, the communication apparatus may further include a storage module. The storage module may be configured to store instructions and/or data. The processing module 601 may read the instructions and/or the data in the storage module, so that the communication apparatus implements the foregoing method embodiments. For example, the storage module may be configured to store the first OBSS information and/or the second OBSS information.

In the foregoing embodiments, for specific descriptions of content such as the first radio frame, the second radio frame, the third radio frame, the fourth radio frame, the first OBSS information, and the second OBSS information, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus in FIG. 6 falls within the protection scope of embodiments of this application. The following descriptions are merely examples, and a product form of the communication apparatus in embodiments of this application is not limited thereto.

In a possible implementation, in the communication apparatus shown in FIG. 6, the processing module 601 may be one or more processors, and the transceiver module 602 may be a transceiver; or the transceiver module 602 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A connection manner of the processor and the transceiver is not limited in embodiments of this application. In a process of performing the foregoing method, a process of sending information in the foregoing method may be a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information, and inputs the information into the processor. Further, after the transceiver receives the information, other processing may need to be performed on the information before processed information is input into the processor.

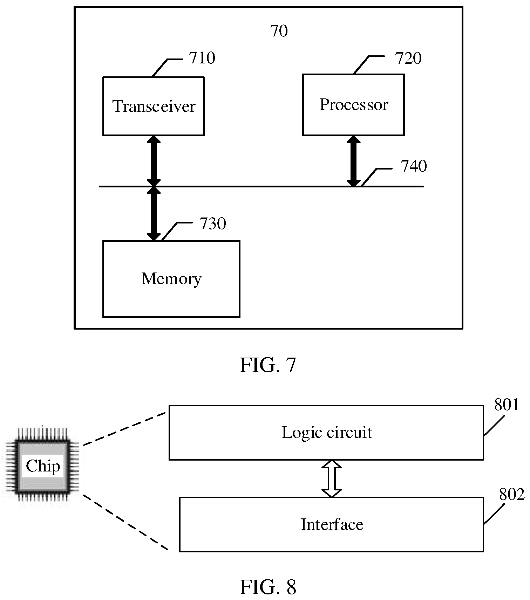

As shown in FIG. 7, a communication apparatus 70 includes one or more processors 720 and a transceiver 710.

For example, the communication apparatus may be configured to perform the steps, the methods, or the functions performed by the first communication apparatus. In this case, the processor 720 may be configured to perform the functions or the steps implemented by the processing module 601 shown in FIG. 6, and the transceiver 710 may be configured to perform the functions or the steps implemented by the transceiver module 602 shown in FIG. 6. For specific descriptions of the processor 720 and the transceiver 710, refer to FIG. 6 or the foregoing method embodiments. Details are not described herein again.

For example, the communication apparatus may be configured to perform the steps, the methods, or the functions performed by the second communication apparatus. In this case, the processor 720 may be configured to perform the functions or the steps implemented by the processing module 601 shown in FIG. 6, and the transceiver 710 may be configured to perform the functions or the steps implemented by the transceiver module 602 shown in FIG. 6. For specific descriptions of the processor 720 and the transceiver 710, refer to FIG. 6 or the foregoing method embodiments. Details are not described herein again.

In the foregoing embodiments, for specific descriptions of content such as the first radio frame, the second radio frame, the third radio frame, the fourth radio frame, the first OBSS information, and the second OBSS information, refer to the descriptions in the foregoing method embodiments. Details are not described herein again.

In each implementation of the communication apparatus shown in FIG. 7, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 70 may further include one or more memories 730, configured to store program instructions and/or data. The memory 730 is coupled to the processor 720. The coupling in this embodiment of this application may be an indirect coupling or a communication connection between apparatuses, units, or modules in an electrical form, a mechanical form, or another form, and is used for information exchange between the apparatuses, the units, or the modules. The processor 720 may collaboratively operate with the memory 730. The processor 720 may execute the program instructions stored in the memory 730. Optionally, at least one of the one or more memories may be included in the processor.

In this embodiment of this application, a specific connection medium among the transceiver 710, the processor 720, and the memory 730 is not limited. In this embodiment of this application, in FIG. 7, the memory 730, the processor 720, and the transceiver 710 are connected to each other through a bus 740. The bus is represented by using a thick line in FIG. 7. A manner of connection between other components is only schematically described, but is not used as a limitation. The bus may be classified into an address bus, a data bus, a control bus, and the like. For ease of representation, only one thick line is used to represent the bus in FIG. 7, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

The processor 720 is mainly configured to process a communication protocol and communication data, control the entire communication apparatus, execute a software program, and process data of the software program. The memory 730 is mainly configured to store the software program and the data. The transceiver 710 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 720 may read the software program from the memory 730, interpret and execute instructions of the software program, and process data of the software program. When data needs to be sent wirelessly, the processor 720 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 720. The processor 720 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may further have more components than those in FIG. 7, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 6, the processing module 601 may be one or more logic circuits, and the transceiver module 602 may be an input/output interface that is also referred to as a communication interface, an interface circuit, an interface, or the like. Alternatively, the transceiver module 602 may be a sending module and a receiving module. The sending module may be an output interface, and the receiving module may be an input interface. The sending module and the receiving module are integrated into one module, for example, an input/output interface. As shown in FIG. 8, a communication apparatus shown in FIG. 8 includes a logic circuit 801 and an interface 802. In other words, the processing module 601 may be implemented through the logic circuit 801, and the transceiver module 602 may be implemented through the interface 802. The logic circuit 801 may be a chip, a processing circuit, an integrated circuit, a system on chip (system on chip, SoC), or the like. The interface 802 may be a communication interface, an input/output interface, a pin, or the like. For example, FIG. 8 shows an example in which the communication apparatus is a chip. The chip includes a logic circuit 801 and an interface 802. For example, the chip may further include a memory, and the memory may be used for first OBSS information and/or second OBSS information, and the like. Alternatively, the memory may be configured to store computer instructions. For example, the logic circuit 801 may perform, based on the instructions, the methods, the functions, or the steps performed by the first communication apparatus. For another example, the logic circuit 801 may perform, based on the instructions, the methods, the functions, or the steps performed by the second communication apparatus.

In this embodiment of this application, the logic circuit and the interface may be coupled to each other. A specific connection manner between the logic circuit and the interface is not limited in this embodiment of this application. For example, the logic circuit 801 may be configured to perform the functions or the steps implemented by the processing module 601 shown in FIG. 6, and the interface 802 may be configured to perform the functions or the steps implemented by the transceiver module 602 shown in FIG. 6. For specific descriptions of the logic circuit 801 and the interface 802, refer to FIG. 6 or the foregoing method embodiments. Details are not described herein again.

The communication apparatus shown in embodiments of this application may implement the methods provided in embodiments of this application in a form of hardware, or may implement the methods provided in embodiments of this application in a form of software. This is not limited in embodiments of this application.

In the foregoing embodiments, for specific descriptions of content such as the first radio frame, the second radio frame, the third radio frame, the fourth radio frame, the first OBSS information, and the second OBSS information, refer to the descriptions in the foregoing method embodiments. Details are not described herein again. For specific implementations of the embodiments shown in FIG. 8, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus device in the methods provided in this application.

This application further provides a computer program. The computer program is used to implement operations and/or processing performed by the second communication apparatus device in the methods provided in this application.

This application further provides a computer-readable storage medium. The computer-readable storage medium stores computer code. When the computer code is run on a computer, the computer is enabled to perform operations and/or processing performed by the first communication apparatus device in the methods provided in this application.

This application further provides a computer-readable storage medium. The computer-readable storage medium stores computer code. When the computer code is run on a computer, the computer is enabled to perform operations and/or processing performed by the second communication apparatus device in the methods provided in this application.

This application further provides a computer program product. The computer program product includes computer code or a computer program. When the computer code or the computer program is run on a computer, operations and/or processing performed by the first communication apparatus device in the methods provided in this application are/is performed.

This application further provides a computer program product. The computer program product includes computer code or a computer program. When the computer code or the computer program is run on a computer, operations and/or processing performed by the second communication apparatus device in the methods provided in this application are/is performed.

In the several embodiments provided in this application, it should be understood that the disclosed system, apparatus, and method may be implemented in other manners. For example, the described apparatus embodiments are merely examples. For example, division into modules is merely logical functional division. In an actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to a conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first communication apparatus, and the method comprises:
sending a first radio frame, wherein the first radio frame comprises first overlapping basic service set OBSS information;
receiving a second radio frame on a first channel, wherein the second radio frame is a radio frame sent by a station in a first OBSS indicated by the first OBSS information; and
switching a communication channel.

2. The method according to claim 1, wherein switching a communication channel comprises:
switching a communication channel when at least one of the following conditions is met: a received signal strength indicator RSSI of the second radio frame is greater than or equal to an RSSI threshold, and a length of the second radio frame is greater than or equal to a length threshold.

3. The method according to claim 2, wherein the first radio frame further comprises information about the RSSI threshold or information about the length threshold.

4. The method according to any one of claims 1 to 3, wherein the first OBSS information comprises at least one of the following:
basic service set BSS color information of the first OBSS;
BSS identifier BSSID information of the first OBSS; and
medium access control MAC address information of the station in the first OBSS.

5. The method according to claim 4, wherein the BSS color information is a bitmap of a BSS color value, each bit in the bitmap of the BSS color value corresponds to one BSS color value, and a value of each bit indicates whether the corresponding BSS color value is a BSS color value that is of the first OBSS and that causes the first communication apparatus to switch a communication channel; or
the BSS color information indicates one or more BSS color values, and the BSS color value is a BSS color value that is of the first OBSS and that causes the first communication apparatus to switch a communication channel; or
the BSSID information is a bitmap of a partial BSSID, the partial BSSID is m bits in a BSSID, the bitmap of the partial BSSID comprises 2^{m} bits, each bit in the bitmap of the partial BSSID corresponds to one partial BSSID, and a value of each bit indicates whether the corresponding partial BSSID is a partial BSSID that is of the first OBSS and that causes the first communication apparatus to switch a communication channel.

6. The method according to any one of claims 1 to 5, wherein the method further comprises:
receiving a third radio frame, wherein the third radio frame comprises second OBSS information.

7. The method according to any one of claims 1 to 6, wherein switching a communication channel comprises at least one of the following:
switching from a first channel to a second channel, performing signal monitoring on the second channel, performing channel contention on the second channel, and sending or receiving a radio frame on the second channel.

8. The method according to claim 7, wherein the first channel is a primary channel and the second channel is a non-primary channel.

9. A communication method, wherein the method is applied to a second communication apparatus, and the method comprises:
receiving a first radio frame, wherein the first radio frame comprises first overlapping basic service set OBSS information;
receiving a second radio frame on a first channel, wherein the second radio frame is a radio frame sent by a station in a first OBSS indicated by the first OBSS information; and
switching a communication channel.

10. The method according to claim 9, wherein switching a communication channel comprises:
switching a communication channel when at least one of the following conditions is met: a received signal strength indicator RSSI of the second radio frame is greater than or equal to an RSSI threshold, and a length of the second radio frame is greater than or equal to a length threshold.

11. The method according to claim 10, wherein the first radio frame further comprises information about the RSSI threshold or information about the length threshold.

12. The method according to any one of claims 9 to 11, wherein the first OBSS information comprises at least one of the following:
basic service set BSS color information of the first OBSS;
BSS identifier BSSID information of the first OBSS; and
medium access control MAC address information of the station in the first OBSS.

13. The method according to claim 12, wherein the BSS color information is a bitmap of a BSS color value, each bit in the bitmap of the BSS color value corresponds to one BSS color value, and a value of each bit indicates whether the corresponding BSS color value is a BSS color value that is of the first OBSS and that causes the first communication apparatus to switch a communication channel; or
the BSS color information indicates one or more BSS color values, and the BSS color value is a BSS color value that is of the first OBSS and that causes the first communication apparatus to switch a communication channel; or
the BSSID information is a bitmap of a partial BSSID, the partial BSSID is m bits in a BSSID, the bitmap of the partial BSSID comprises 2^{m} bits, each bit in the bitmap of the partial BSSID corresponds to one partial BSSID, and a value of each bit indicates whether the corresponding partial BSSID is a partial BSSID that is of the first OBSS and that causes the first communication apparatus to switch a communication channel.

14. The method according to any one of claims 9 to 13, wherein the method further comprises:
sending a third radio frame, wherein the third radio frame comprises second OBSS information.

15. The method according to any one of claims 9 to 14, wherein switching a communication channel comprises at least one of the following:
switching from a first channel to a second channel, performing signal monitoring on the second channel, performing channel contention on the second channel, and sending or receiving a radio frame on the second channel.

16. The method according to claim 15, wherein the first channel is a primary channel and the second channel is a non-primary channel.

17. A communication apparatus, comprising a module configured to perform the method according to any one of claims 1 to 8.

18. A communication apparatus, comprising a module configured to perform the method according to any one of claims 9 to 16.

19. A communication apparatus, comprising a processor, wherein the processor is configured to perform the method according to any one of claims 1 to 16.

20. A communication apparatus, comprising a logic circuit and an interface, wherein the logic circuit is coupled to the interface; and
the interface is configured to input and/or output information, and the logic circuit is configured to perform the method according to any one of claims 1 to 8, or the logic circuit is configured to perform the method according to any one of claims 9 to 16.

21. A computer-readable storage medium, wherein the computer-readable storage medium is configured to store a computer program, and when the computer program is executed, the method according to any one of claims 1 to 16 is performed.

22. A computer program product, wherein the computer program product comprises a computer program, and when the computer program is executed, the method according to any one of claims 1 to 16 is performed.

23. A communication system, wherein the communication system comprises a first communication apparatus and a second communication apparatus, the first communication apparatus is configured to perform the method according to any one of claims 1 to 8, and the second communication apparatus is configured to perform the method according to any one of claims 9 to 16.
